# EUROPEAN PATENT APPLICATION

(11) **EP 1 361 044 A2**
(43) Date of publication of application: **12.11.2003**
(21) Application number: 03252859.8
(22) Date of filing: 07.05.2003
(51) Int. Cl.: B32B 29/00, B32B 9/04, B32B 23/00, C09J 7/04

(54) **Ream wrap comprising PLA resin**

(30) Priority: 07.05.2002 US 378380 P
(71) Applicant: Coating Excellence International, LLC, Wrightstown, Wisconsin 54180 (US)
(72) Inventor: Mueller, LouAnn S., Little Chute, Wisconsin 54140 (US); Arndt, William R., Hilbert, Wisconsin 54129 (US)
(74) Representative: Gallafent, Antony Xavier

(57) **Abstract**

Ream wraps comprising PLA.

## Description

### RELATED APPLICATIONS

The present application is a continuation-in-part of U.S. Provisional Application Serial No. 60/378,380 filed May 7, 2002 and U.S application Serial Nos. 10/021,184 filed October 30, 2001, 09/178,329 filed October 23, 1998, 10/057,410 filed January 23, 2002, 10/023,500 filed December 17, 2001, 10/094,060 filed March 8, 2002,10/117,625 filed April 5, 2002, and 10/340,308 filed January 10, 2003, all of which are incorporated by reference.

### FIELD OF THE INVENTION

The present invention relates to the use of PLA for ream wraps.

### BACKGROUND OF THE INVENTION

U.S. Patent 6,197,380 relates to a paper having a melt-stable lactide polymer coating and process for manufacture thereof. A lactide polymer coating results in a strong, repulpable, high gloss, paper coating. The lactide polymer comprises a plurality of polylactide polymer chains, residual lactide in concentration of less than about 5 percent in water in concentration of less than about 2000 parts-per million. The patent also relates to a method for coating paper comprising extruding a lactide polymer composition onto a moving paper to provide a coated paper wherein the lactide polymer composition comprises; a lactide level of less than about 1 wt. % if any lactide present, a number average molecular weight of between about 10,000 and about 200,000; a catalyst comprising a ring opening polymerization catalyst; and catalyst deactivating agent in an amount sufficient to reduce catalytic depolymerization, relative to an absence of the catalyst deactivating agent.

U.S. Patent 6,291,597 relates to a viscosity modified lactide polymer composition and process for the manufacture. The polylactide polymer is prepared by providing in the composition polylactide polymer molecules which have been modified, relative to linear non-substituted polylactide, to provide increased molecular interaction among polylactide backbone chains in the composition.

U.S. patent 6,093,791 relates to a melt-stable semi-crystalline lactide polymer film and process for the manufacture. The lactide polymer comprises a plurality of polylactide polymer chains, residual lactide in concentration of less than about 5 percent and water in concentration of less than about 2000 parts per million.

U.S. Patent 6,103,809 relates to a thermoplastic composition comprising at least one crystalline water sensitive polymer and at least one amorphous water sensitive polymer. The thermoplastic compositions are useful in a variety of applications wherein water or moisture sensitive thermoplastic materials are employed such as various packaging adhesive applications including case and carton sealing, remoistenable adhesives, repulpable/recyclable adhesives and multiwall bag applications. The invention is also useful for moisture activatable reinforcement strings and opening tapes for corrugated containers, as well as a variety of nonwoven applications such as body fluid impermeable barriers, core stabilization adhesives and construction adhesives.

U.S. Patent 6,114,042 relates to biodegradable polymers, the production thereof and use thereof for producing biodegradable moldings.

U.S. Patent 6,114,495 relates to a lactic avid residue containing polymer composition and product having improved stability and to methods for the preparation and use thereof. The lactic acid residue containing polymer preferably includes a polylactide polymer having a number average molecular weight of between about 25,000 and about 200,000, lactide, if present at all, present in a concentration of less than 0.5% wt% based on the weight of the composition, and deactivating agents. Articles which can be manufactured from the lactic acid residue containing polymer composition include fibers, coated paper, films, moldings and foam.

U.S. Patent 5,852,166 relates to a lactide polymer coating resulting in a strong, repulpable, high gloss, paper coating. The lactide polymer comprises a plurality of poly(lactide) polymer chains, residual lactide in concentration of less than about 5 percent and water in concentration of less than about 2000 parts per million. A process for coating paper with the lactide polymer composition is also disclosed.

U.S. Patent 5,736,204 relates to a compostable paperboard container and package for liquids which is coated with a material capable of degrading to carbon dioxide, water and biomass under composting conditions.

U.S. Patent 6,312,823 relates to a compostable multilayer film which includes a core layer having a first surface and a second surface, a first blocking reducing layer covering the first surface of the core layer, and a second blocking reducing layer covering the second surface of the core layer. The core layer comprises a lactic acid residue containing polymer having a glass transition temperature below 20 degrees C. At least one of the first and second blocking reducing layers comprise a semicrystalline aliphatic polyester. The core layer may be peroxide modified polylactide polymer which exhibits bridging between polylactide polymer chains. The compostable multilayer structures are films having desirable properties of flexibility and tear resistance and can be used to provide disposable bags or wrappers.

U.S. Patent 6,183,814 relates to coated grade polylactide and coated paper, preparations thereof and articles prepared therefrom. A coated paper product including a paper layer and a polymer layer, wherein the polymer layer includes a polylactide polymer composition having a ratio of Mz to Mn of greater than about 6. The polymer composition when melted, exhibits a die swell of greater than about 1.25 for a melt flow index of greater than about 2.

U.S. Patent 6,153,306 relates to a paper coated with polylactide and a method for making it. The invention relates to a polylactide coated paper or board product which is made by coextrusion wherein the polylactide is extruded together with a conventional polymer, such as polyolefin, onto the surface of the paper, and after extrusion the polyolefin film is removed and recycled.

U.S. Patent 5,925,726 relates to a thermoplastic biodegradable polyester, a process for the preparation thereof, and articles manufactured therefrom. The invention relates to a melt processible copolyester and a process and prepolymer for the preparation thereof. The copolymer contains structural units derived from a polyester and structural units derived from diepoxy, and the polyester units at least essentially consist of hydroxy acid monomers. The copolyester is hydrolytically degradable and it can be used as a biodegradable polymer for the manufacture of injection molded articles as well as thermoformed and blow molded packages, pouches, sacks and bottles, for the coating of sacks, bags and films made from paper or cardboard and for the preparation of fibers, fibre cloths and expanded polymer articles.

U.S. Patent 5,936,045 relates to biodegradable polymers, the preparation thereof, and the use thereof for producing biodegradable moldings.

U.S. Patent 6,075,118 relates to water responsive, biodegradable film compositions comprising polylactide and polyvinyl alcohol and a method for making the films. The films are useful as a component in flushable and degradable articles.

U.S. Patent 6,080,478 relates to a multilayer material including a cellulose based naturally decomposing basic layer, at least one polyhydroxyalkanoate layer on the basic layer and at least one biodegradable polylactide layer between the basic layer and the at least one polyhydroxyalkanoate layer.

U.S. Patent 5,540,962 relates to a compostable paperboard container and package for liquids coated with a polymeric material capable of degrading under composting conditions and subsequently in the presence of light to form carbon dioxide, water and biomass.

U.S. Patent 5,665,474 relates to a lactide polymer coating resulting in a strong, repulpable, high gloss, paper coating. The lactide polymer comprises a plurality of polylactide polymer chains, residual lactide in concentration of less than about 5 percent and water in concentration of less than about 2000 parts per million. A process for coating the paper with the lactide polymer composition is also disclosed.

U.S. Patent 5,807,973 relates to a nonwoven fabric comprised of a lactide polymer. The lactide polymer comprises a plurality of polylactide chains, residual lactide in concentration of less than about 2 percent and water in concentration of less than about 2000 parts per million. The patent also discloses a process for manufacturing a nonwoven fabric with the lactide polymer composition.

U.S. Patents 5,849,374 and 5,849,401 relate to a compostable, multilayer structure in the form of a film, sheet, laminate, and the like, which comprises a core layer having a first surface and a second surface, a first blocking reducing layer covering the first surface of the core layer, and a second blocking reducing layer covering the second surface of the core layer. The core layer contains a lactic acid residue-containing polymer and has a glass transition temperature below about 20 degrees Celsius. The first and second blocking reducing layers include a polymer composition of a hydrolyzable polymer having a glass transition temperature above about 50 degrees Celsius. The multilayer structure can be used for preparing bags and wrappers.

### SUMMARY OF THE INVENTION

The present invention relates to the use of PLA resin in ream wraps. PLA resin is substituted for poly in current ream wrap applications. One advantage is compostability.

The present invention relates to a ream wrap comprising; one or more layers of paper or film and a PLA resin.

The present invention relates to a composite wrap material comprising; a layer or sheet of cellulosic material, and a layer of PLA film that is integrally bonded together by means of an adhesive layer. It is an object of the present invention for the adhesive to comprise PLA. It is an object of the present invention for the film layer and/or adhesive layer to provide a moisture vapor barrier to protect contents of a package within the wrap material. It is an object of the present invention for the wrap material to provide a clear or transparent wrap such that a consumer can see the paper layer laminated to the film layer. It is an object of the present invention for one or more of the layers to optionally contain a pigment to provide coloration.

The present invention relates to a method of preparing a composite wrap material comprising: laminating a three-layer structure comprising a layer of paper, a PLA layer or film layer and an adhesive layer, using a nip roller apparatus or other suitable laminating device. The paper and film layers are passed with the adhesive layer thereinbetween through a pair of nip rollers bonding the layers together.

The present invention relates to a ream wrapper comprising; an unbleached (brown), semi-bleached (tan), or bleached (white) paper; and a PLA coating. It is an object of the present invention for the paper to have a weight of between about 30 to 70 pounds per 3,000 sq. ft. It is an object of the present invention for paper to be coated with about 7 to 15 pounds per 3,000 sq. ft. of PLA resin. It is an object of the present invention for the coating to be made by mixing PLA with a dye or pigment.

The present invention relates to a method of preparing a ream wrapper comprising; mixing PLA with a dye or pigment, and coating the mixture on either side of an about 30 to 70 pound unbleached (brown), semi-bleached (tan), or bleached (white) paper. It is an object of the present invention for the coating to provide a high quality printing surface for outside of the ream wrap in a color that enhances printing graphics, instantly identifies a manufacturer of a wrapped paper product, and/or identifies color of paper encased in the ream wrap. It is an object of the present invention for the ream wrap to act as a moisture barrier, protect against physical damage, and use, more environmentally friendly unbleached (brown) or semi-bleached (tan) papers while still providing an enhanced printing surface. It is an object of the present invention for the ream wrapper to be compostable.

The present invention relates to a ream wrapper comprising; an unbleached (brown) paper or a semi-bleached (tan) paper, and a with a white PLA coating. It is an object of the present invention for the coating to be made by mixing PLA with a white dye or pigment.

The present invention relates to a ream wrap comprising: a first layer of paper, a second layer of transparent film, and a layer of PLA between the first and second layers. The paper has holes precut at various locations. The holes are covered by the layer of film.

The present invention relates to a high strength poly one-side ream wrapper comprising: copolymer and/or terpolymer resins. The copolymer and terpolymer resins comprise butene, hexene, and/or octene with ethylene feed stocks. The copolymer or terpolymer are applied to a paper surface alone or blended with PLA resins. It is an object of the present invention for the paper to comprise an additional coat of PLA resin.

The present invention relates to a method for producing a high strength poly one side ream wrapper comprising; blending a PLA resin with a copolymer and/or terpolymer resin. The mixture is fed into an extruder die creating an extrudate. The extrudate is applied to a paper surface between a backing roll and a chill roll creating a coated paper with PLA monomer and copolymer or terpolymer blended into the monomer.

The present invention relates to a method for producing a high strength poly one side ream wrapper comprising; coextruding a copolymer and/or terpolymer with a PLA layer by feeding the copolymer and/or terpolymer layer and the PLA layer through a coextruder die forming a coextrudate. The copolymer and/or terpolymer layer can be blended with PLA. The coextrudate is applied to a surface of a paper wherein the copolymer and/or terpolymer layer face the paper surface. The coextrudate is applied to the paper surface between a backing roll and a chill roll creating a coated paper having one layer of copolymer or terpolymer and one layer of PLA.

The present invention relates to a high strength poly one side ream wrapper comprising; a coextruded coated paper having one layer of copolymer and/or terpolymer on top of the paper and one layer of PLA on top of the copolymer or terpolymer layer; the copolymer and/or terpolymer layer can also contain PLA.

The present invention relates to a method for producing a high strength poly one side ream wrapper comprising; coextrading a copolymer and/or terpolymer layer with a PLA layer by feeding the copolymer and/or terpolymer layer and the PLA layer through a coextruder die to form a coextrudate. The copolymer and/or terpolymer layer can be blended with PLA. The coextrudate is applied to a paper surface with the PLA layer facing the paper. The coextrudate is applied to the paper surface between a backing roll and a chill roll, creating a coated paper with one layer of copolymer and/or terpolymer and one layer of PLA.

The present invention relates to a high strength poly one side ream wrapper comprising; a coextruded coated paper having one layer of PLA on top of the paper layer and a layer of copolymer and/or terpolymer on top of the PLA layer. The copolymer and/or terpolymer layer can be blended with PLA.

The present invention relates to a method for producing a high strength poly one side ream wrapper comprising; coextruding a layer of copolymer and/or terpolymer and a layer of PLA on each side of a copolymer and/or terpolymer layer by feeding the copolymer and/or terpolymer layer and the PLA layers through a coextruder die forming a coextrudate. The copolymer and/or terpolymer layer can also contain PLA. The coextrudate is applied to a paper surface so that one of the PLA layers faces paper by running the coextrudate and the paper between a backing roll and a chill roll, creating a coated paper with one layer of copolymer and/or terpolymer between two layers of PLA.

The present invention relates to a high strength poly one side ream wrapper comprising; a poly coated paper having one layer of PLA on top of a paper layer followed by a layer of copolymer and/or terpolymer having on top of it a layer of PLA. The copolymer and/or terpolymer layer can also contain PLA.

The present invention relates to a composite wrap material comprising; a layer or sheet of cellulosic material and a layer of PLA film material that are integrally bonded together by means of an adhesive layer comprising PLA interposed thereinbetween. It is an object of the present for the PLA film layer and/or said adhesive layer to provide a moisture vapor barrier to protect contents packaged within the wrap material. It is an object of the present invention for the wrap material to provide a clear or transparent wrap such that a consumer can see the paper layer laminated to the PLA film layer. It is an object of the present invention for one or more of the layers to contain a pigment to provide coloration. It is an object of the present invention for the wrap to be provided with a high gloss print surface or a standard paper print surface. It is an object of the present invention for the paper material and/or film to be a metalized material. It is an object of the present invention for the paper to be printed before lamination so that the print shows through the film layer.

The present invention relates to a ream wrap comprising; a film layer, PLA layer and a paper layer having an additional layer of PLA coated on the paper. It is an object of the present invention for the inner layer of PLA bond to the outer film layer through heat.

The present invention relates to a high strength poly film ream wrapper comprising; two sheets of PLA film laminated together with a layer of copolymer and/or terpolymer resins. The copolymer and/or terpolymer resins comprise butene, hexene, and/or octene with ethylene in feed stocks.

The present invention relates to a method for producing a high strength poly film ream wrapper comprising; applying or extruding copolymer and/or terpolymer resins between two sheets of solid plastic PLA film; or laminating two separate layers of solid plastic PLA film with a copolymer and/or terpolymer resin.

The present invention relates to a high strength poly film ream wrap material comprising; a first layer comprising a polypropylene, biaxially oriented polypropylene (BOPP), polyester or PLA solid film; a second layer comprising a polypropylene, biaxially oriented polypropylene (BOPP), polyester, or PLA solid film; and a third layer comprising copolymer and/or terpolymer resins, alone, or blended with polyethylene or PLA. The third layer is interposed between the first layer and the second layer.

The present invention relates to a method of making a high strength poly film ream wrapper comprising; applying a copolymer and/or terpolymer layer to either of solid plastic PLA film layers, and conveying the layers toward a pair of nip rollers. The film layers are directed to an adjacent, noncontact position with the copolymer and/or terpolymer resin layer on its respective opposite sides prior to passing through the nip rollers. The layers are passed through the nip rollers, forming the poly film ream wrapper.

The present invention relates to an insulation facing material comprising; a coextruded coated paper material comprising; a first layer of paper, a second layer of PLA resin material and a third outside sealant layer of low melt polymer resin, comprising, PLA; wherein all three layers are integrally bonded together.

The present invention relates to a process for making a composite material comprising: providing a first sheet of cellulosic material and a second coextruded layer comprising two layers of PLA resin materials, and applying the coextrusion layers to a surface of the first sheet. The first sheet and second coextrusion layers are conveyed into a laminating apparatus, bonding the layers to form an integral composite material.

### DESCRIPTION OF THE PREFERRED EMBODIMENTS

In one embodiment a composite wrap material comprises a layer or sheet of cellulosic material and a layer of polymer film or PLA film that is integrally bonded together by means of an adhesive layer, which in one embodiment, comprises PLA, interposed thereinbetween. The film layer and/or the adhesive layer function to provide a moisture vapor barrier to protect the contents of the package within the wrap material. The wrap material can provide a clear or transparent wrap such that a consumer can see the paper layer laminated to the film layer. One or more layers can optionally contain a pigment to provide coloration. The composite paper/film wrap material can be prepared by laminating a three-layer structure comprising the layer of paper, the PLA layer or film layer and an adhesive layer, using a nip roller apparatus or other suitable laminating device. The paper and film layers with the adhesive layer thereinbetween can be passed through a pair of nip rollers to bond the two layers together. Advantageously, the resulting composite wrap facilitates high burst strength of the final package, the option of a high gloss print surface or a standard paper print surface, a moisture barrier to prevent moisture absorption by the wrapped paper, and the fold characteristics of paper. The composite wrap material is also compostable.

In a further embodiment of the present invention a ream wrapper is made of either an unbleached (brown), semi-bleached (tan), or bleached (white) paper with a PLA coating. The paper has a weight of between about 30 to 70 pounds per 3,000 sq. ft. The paper is coated with about 7 to 15 pounds per 3,000 sq. ft. of PLA resin. The coating is made by mixing PLA with a dye or pigment. The mixture is then coated on either side of the about 30 to 70 pound unbleached (brown), semi-bleached (tan), or bleached (white) paper. The invention provides a high quality printing surface for the outside of the ream wrap in a color that enhances printing graphics, instantly identifies the manufacturer of the wrapped paper product, and/or identifies the color of the paper encased in the ream wrap. The present invention also provides a ream wrap that also acts as a moisture barrier, protects against physical damage, and uses, where possible, the more environmentally friendly unbleached (brown) or semi-bleached (tan) papers while still providing an enhanced printing surface. The ream wrapper is also compostable.

In a further embodiment, the ream wrapper is made of an unbleached (brown) paper or a semi-bleached (tan) paper with a white poly coating. This results in a white print surface for the outside of the ream wrap. The white poly coating is made by mixing PLA with a white dye or pigment.

In an embodiment, a ream wrap comprises a first layer of paper, a second layer of transparent film and a layer of PLA between the first and second layers. The paper has holes precut at various locations, the holes being covered by the layer of film.

In a further embodiment, a high strength poly one-side ream wrapper is made by utilizing copolymer and/or terpolymer resins. The copolymer and terpolymer resins are made by combining butenc, hexene, and/or octene with ethylene feed stocks being used to make the resin. The product can be produced by applying the copolymer or terpolymer to the paper surface or by blending the copolymer and/or terpolymer resins with PLA resins before applying it to the paper surface. The product can be produced by co-extruding a PLA resin with copolymer or terpolymer resins. The paper can be additionally coated with PLA resins.

In a further embodiment, the present invention relates to a method for producing a high strength poly one side ream wrapper comprising; feeding a copolymer and/or terpolymer into an extruder die creating an extrudate and then coating a paper surface with the extrudate between a backing roll and a chill roll. This forms a poly coated paper with the copolymer and/or terpolymer coating.

In a further embodiment, the present invention relates to a method for producing a high strength poly one side ream wrapper comprising; blending a PLA resin with a copolymer and/or terpolymer resin and feeding the mixtures into an extruder die creating an extrudate. The extrudate is applied to a paper surface between a backing roll and a chill roll creating a coated paper with PLA monomer and copolymer or terpolymer blended into the monomer.

In an embodiment, the present invention relates to a method for producing a high strength poly one side ream wrapper comprising; coextruding a copolymer and/or terpolymer with a PLA layer by feeding the copolymer and/or terpolymer layer and the PLA layer through a coextruder die forming a coextrudate. The copolymer and/or terpolymer layer can be blended with PLA. The coextrudate is applied to a surface of a paper wherein the copolymer and/or terpolymer layer face the paper surface, the coextrudate being applied to the paper surface between a backing roll and a chill roll; creating a coated paper having one layer of copolymer or terpolymer and one layer of PLA.

In a further embodiment, the present invention relates to a high strength poly one side ream wrapper comprising; a coextruded coated paper having one layer of copolymer and/or terpolymer on top of the paper and one layer of PLA on top of the copolymer or terpolymer layer. The copolymer and/or terpolymer layer can also contain PLA.

In a further embodiment, the present invention relates to a method for producing a high strength poly one side ream wrapper comprising; coextruding a copolymer and/or terpolymer layer with a PLA layer by feeding the copolymer and/or terpolymer layer and the PLA layer through a coextruder dic to form a coextrudate. The copolymer and/or terpolymer layer can be blended with PLA. The coextrudate is applied to a paper surface with the PLA layer facing the paper; the coextrudate applied to the paper surface between a backing roll and a chill roll. This creates a coated paper with one layer of copolymer and/or terpolymer and one layer of PLA.

In a further embodiment, the present invention relates to a high strength poly one side ream wrapper comprising; a coextruded coated paper having one layer of PLA on top of a paper layer and a layer of copolymer and/or terpolymer on top of the PLA layer. The copolymer and/or terpolymer layer can be blended with PLA.

In an embodiment, the present invention relates to a method for producing a high strength poly one side ream wrapper comprising; coextruding a layer of copolymer and/or terpolymer and a layer of PLA on each side of the copolymer and/or terpolymer layer by feeding the copolymer and/or terpolymer layer and the PLA layers through a coextruder die forming a coextrudate. The copolymer and/or terpolymer layer can also contain PLA. The coextrudate is applied to a paper surface so that one of the PLA layers faces the paper by running the coextrudate and the paper between a backing roll and a chill roll. This creates a coated paper with one layer of copolymer and/or terpolymer between two layers of PLA.

In a further embodiment, the present invention relates to a high strength poly one side ream wrapper comprising; a poly coated paper having one layer of PLA on top of a paper layer followed by a layer of copolymer and/or terpolymer having on top of it a layer of PLA. The copolymer and/or terpolymer layer can also contain PLA.

In a further embodiment, the present invention relates to a composite wrap material comprising a layer or sheet of cellulosic material and a layer of PLA film material that are integrally bonded together by means of an adhesive layer comprising PLA interposed thereinbetween. The PLA film layer and/or the adhesive layer function to provide a moisture vapor barrier to protect the contents packaged within the wrap material. The wrap material can provide a clear or transparent wrap such that a consumer can see the paper layer laminated to the PLA film layer. One or more layers can optionally contain a pigment to provide coloration. The wrap can also be provided with a high gloss print surface or a standard paper print surface. The paper material and/or film can be a metalized material. Also the paper can be printed before lamination so that the print shows through the film layer.

The composite paper/film wrap material can be prepared by laminating a threc layer structure comprising a layer of paper, an adhesive layer, for example, PLA, and the PLA film layer using a nip roller apparatus or other suitable laminating device. The paper and film layers with the adhesive layer thereinbetween can be passed through a pair of nip rollers to bond the two layers together.

Advantageously, the resulting composite wrap facilitates high burst strength of the final package, the option of a high gloss print surface or a standard paper print surface, a moisture barrier to prevent moisture absorption. The composite wrap material is also compostable.

In a further embodiment, the present invention relates to a ream wrap comprising a film-PLA-paper having an additional layer of PLA coated on the paper. The ream wrap comprises a film/PLA/paper/PLA configuration. This additional layer can be either polyethylene, polypropylene or PLA. This allows the inner layer of PLA to bond to the outer film layer through heat. This eliminates the need for gluing the product. There may be additional coatings or treatments, or other layers that can be added to the outside of the film to provide the heat seal.

In a further embodiment, the present invention relates to a high strength poly film ream wrapper. The product is made by using a copolymer and/or terpolymer resins alone or blended with PLA, in the place of an adhesive, between two layers of solid plastic film. The copolymer and terpolymer resins are made by combining butene, hexene, and/or octene with ethylene in the feed stocks. The product is produced by applying or extruding the copolymer and/or terpolymer resins alone or blended with PLA between two sheets of solid plastic film.

In a further embodiment, the present invention relates to a high strength poly film ream wrapper comprising; two sheets of PLA film laminated together with a layer of copolymer and/or terpolymer resins- The copolymer and/or terpolymer resins comprise butene, hexene, and/or octene with ethylene in feed stocks. The copolymer and/or terpolymer resins are applied or extruded between two sheets of PLA film. This creates a product whereby two separate layers of PLA film are laminated together with a layer of copolymer and/or terpolymer resins in between the film layers.

In an embodiment, the present invention relates to a method for producing a high strength poly film ream wrapper comprising; applying or extruding copolymer and/or terpolymer resins between two sheets of solid plastic PLA film or laminating two separate layers of solid plastic PLA film with a copolymer and/or tetpolymer resin. This creates a PLA film/copolymer and/or terpolymer resin/PLA film combination.

In a further embodiment, the present invention relates to a high strength poly film ream wrap material comprising; a first layer comprising a polypropylene, biaxially oriented polypropylene (BOPP), polyester or PLA solid film. A second layer comprises a polypropylene, biaxially oriented polypropylene (BOPP), polyester, or PLA solid film. A third layer comprises copolymer and/or tetpolymer resins, alone, or blended with polyethylene or PLA. The third layer is interposed between the first layer and the second layer.

In a further embodiment, the present invention relates to a method of making a high strength poly film ream wrapper comprising; applying a copolymer and/or terpolymer layer to either of solid plastic PLA film layers. The layers are conveyed toward a pair of nip rollers. The film layers are directed to an adjacent, noncontact position with the copolymer and/or terpolymer resin layer on its respective opposite sides prior to passing through the nip rollers. The layers pass through the nip rollers, forming the poly film ream wrapper.

In a further embodiment, the present invention relates to a composite wrap material comprising a layer of paper or cellulosic material and a layer of coextruded resin. The coextrusion process comprises applying two or more layers of different resins simultaneously to one side of the paper. The composite wrap material has one resin with low moisture transmission rates and/or high strength characteristics and the other resin has heat seal or glueable characteristics similar to the polyethylene coated wraps currently used in the market.

The inside coextrusion layer comprises a layer of polypropylene homopolymer or copolymer, high density polyethylene, PLA, or linear low density polyethylene which provides higher strength characteristics and lower moisture vapor transmission rates. The outside layer may comprise low density polyethylene, or PLA which provides a heat seal or glueable surface.

In a further embodiment, the present invention relates to an insulation facing material comprising; a coextruded coated paper material comprising; a first layer of paper, a second layer of PLA resin material and a third outside sealant layer of low melt polymer resin, for example, PLA, wherein all three layers are integrally bonded together. The PLA resin layer provides a moisture vapor barrier and improved strength to the coextruded material. The third layer provides an adhesion or bond to the insulation. The coextruded material is faced with a roll or batt of insulation.

In an embodiment, the present invention relates to a process for making a composite material comprising: providing a first sheet of cellulosic material and a second coextruded layer comprising two layers of PLA resin materials. The coextrusion layers are applied to the surface of the first sheet. The first sheet and the second coextrusion layers are conveyed into a laminating apparatus where the layers are bonded to form an integral composite material.

The present invention further relates to co-extrusion of PLA based materials to be part of a paper substrate structure used for insulation facing. Fiberglass and other insulating type materials are incorporated with the coextruded substrate, laminated to the PLA surface to form a composite product used in the building industry.

In a further embodiment, the present invention provides a thin, high strength, moisture barrier coating that address the installers concerns for tear strength, and allows maximum footage at normal roll diameters and meets or exceeds the moisture barrier specifications.

In a further embodiment, the coextrusion process comprises applying two different resins simultaneously, to one side of a paper. One resin has a high strength (burst values at approximately 60 or greater versus with a single layer LPDE of comparable thickness), and low moisture transmission rates (WVTR test valucs of 0.50 or less versus 1.00 with a single LPDE layer of comparable thickness). The other layer provides the low temperature (100 degrees C or less) seal strength required for good adherence to fiberglass or other insulation product. This composite coextruded product provides the desired improvements at the same or lower cost to the fiberglass or other insulation producer.

The coextrusion layer of this embodiment can comprise either a layer of polypropylene homopolymer or copolymer, high density polyethylene, PLA or linear low density polyethylene all of which provide higher strength and lower moisture vapor transmission rates. The outer coex is a high melt index (approximately 10-0 melt index or higher) low density polyethylene or PLA providing improved bond (visual pulling away of fiberglass strands when separated) or adhesion to the fiberglass or other insulation product.

## Claims

1. A ream wrap comprising;
one or more layers of paper or film and a PLA resin.

2. A composite wrap material comprising
a layer or sheet of cellulosic material; and
a layer of PLA film that is integrally bonded together by means of an adhesive layer.

3. The composite wrap material of claim 2 wherein said adhesive comprises PLA.

4. The composite wrap material of claim 2 wherein said film layer and/or said adhesive layer function to provide a moisture vapor barrier to protect contents of a package within said wrap material.

5. The composite wrap material of claim 2 wherein said wrap material provides a clear or transparent wrap such that a consumer can see said paper layer laminated to said film layer.

6. The composite wrap material of claim 2 wherein one or more of said layers can optionally contain a pigment to provide coloration.

7. A method of preparing a composite wrap material comprising:
laminating a three-layer structure comprising a layer of paper, a PLA layer or film layer and an adhesive layer, using a nip roller apparatus or other suitable laminating device;
passing said paper and film layers with said adhesive layer thereinbetween through a pair of nip rollers;
bonding said layers together.

8. A ream wrapper comprising;
an unbleached (brown), semi-bleached (tan), or bleached (white) paper; and
a PLA coating.

9. The ream wrapper of claim 8 wherein said paper has a weight of between about 30 to 70 pounds per 3,000 sq. ft.

10. The ream wrapper of claim 8 wherein said paper is coated with about 7 to 15 pounds per 3,000 sq. ft. of PLA resin.

11. The ream wrapper of claim 8 wherein said coating is made by mixing PLA with a dye or pigment.

12. A method of preparing a ream wrapper comprising;
mixing PLA with a dye or pigment;
coating said mixture on either side of an about 30 to 70 pound unbleached (brown), semi-bleached (tan), or bleached (white) paper.

13. The ream wrapper of claim 8 wherein said coating provides a high quality printing surface for outside of said ream wrap in a color that enhances printing graphics, instantly identifies a manufacturer of a wrapped paper product, and/or identifies color of paper encased in said ream wrap.

14. The ream wrapper of claim 8 wherein said ream wrap acts as a moisture barrier, protects against physical damage, and uses, more environmentally friendly unbleached (brown) or semi-bleached (tan) papers while still providing an enhanced printing surface.

15. The ream wrapper of claim 8 wherein said ream wrapper is compostable.

16. A ream wrapper comprising;
an unbleached (brown) paper or a semi-bleached (tan) paper; and
a with a white PLA coating.

17. The ream wrapper of claim 16 wherein said coating is made by mixing PLA with a white dye or pigment.

18. A ream wrap comprising:
a first layer of paper;
a second layer of transparent film; and
a layer of PLA between said first and second layers.
said paper having holes precut at various locations, said holes being covered by said layer of film.

19. A high strength poly one-side ream wrapper comprising:
copolymer and/or terpolymer resins;
said copolymer and terpolymer resins comprising butene, hexene, and/or octene with ethylene feed stocks;
said copolymer or terpolymer are applied to a paper surface alone or blended with PLA resins.

20. The ream wrapper of claim 19 wherein said paper comprises an additional coat of PLA resin.

21. A method for producing a high strength poly one side ream wrapper comprising;
blending a PLA resin with a copolymer and/or terpolymer resin;
feeding said mixture into an extruder die creating an extrudate;
applying said extrudate to a paper surface between a backing roll and a chill roll creating a coated paper with PLA monomer and copolymer or terpolymer blended into said monomer.

22. A method for producing a high strength poly one side ream wrapper comprising;
coextruding a copolymer and/or terpolymer with a PLA layer by feeding said copolymer and/or terpolymer layer and said PLA layer through a coextruder die forming a coextrudate;
said copolymer and/or terpolymer layer can be blended with PLA;
applying said coextrudate to a surface of a paper wherein said copolymer and/or terpolymer layer face said paper surface,
said coextrudate being applied to said paper surface between a backing roll and a chill roll;
creating a coated paper having one layer of copolymer or terpolymer and one layer of PLA.

23. A high strength poly one side ream wrapper comprising;
a coextruded coated paper having one layer of copolymer and/or terpolymer on top of said paper and one layer of PLA on top of said copolymer or terpolymer layer; said. copolymer and/or terpolymer layer can also contain PLA.

24. A method for producing a high strength poly one side ream wrapper comprising;
coextruding a copolymer and/or terpolymer layer with a PLA layer by feeding said copolymer and/or terpolymer layer and said PLA layer through a coextruder die to form a coextrudate;
said copolymer and/or terpolymer layer can be blended with PLA;
applying said coextrudate to a paper surface with said PLA layer facing said paper; said coextrudate applied to said paper surface between a backing roll and a chill roll;
creating a coated paper with one layer of copolymer and/or terpolymer and one layer of PLA.

25. A high strength poly one side ream wrapper comprising;
a coextruded coated paper having one layer of PLA on top of said paper layer and a layer of copolymer and/or terpolymer on top of said PLA layer;
said copolymer and/or terpolymer layer can be blended with PLA.

26. A method for producing a high strength poly one side ream wrapper comprising;
coextruding a layer of copolymer and/or terpolymer and a layer of PLA on each side of a copolymer and/or terpolymer layer by feeding said copolymer and/or tetpolymer layer and said PLA layers through a coextruder die forming a coextrudate;
said copolymer and/or terpolymer layer can also contain PLA;
applying said coextrudate to a paper surface so that one of said PLA layers faces paper by running said coextrudate and said paper between a backing roll and a chill roll;
creating a coated paper with one layer of copolymer and/or terpolymer between two layers of PLA.

27. A high strength poly one side ream wrapper comprising;
a poly coated paper having one layer of PLA on top of a paper layer followed by a layer of copolymer and/or tcrpolymer having on top of it a layer of PLA;
said copolymer and/or terpolymer layer can also contain PLA.

28. A composite wrap material comprising;
a layer or sheet of cellulosic material and a layer of PLA film material that are integrally bonded together by means of an adhesive layer comprising PLA interposed thereinbetween.

29. The composite wrap material of claim 28 wherein said PLA film layer and/or said adhesive layer function to provide a moisture vapor barrier to protect contents packaged within said wrap material.

30. The composite wrap material of claim 28 wherein said wrap material provides a clear or transparent wrap such that a consumer can see said paper layer laminated to said PLA film layer.

31. The composite wrap material of claim 28 wherein one or more of said layers contains a pigment to provide coloration.

32. The composite wrap material of claim 28 wherein said wrap is provided with a high gloss print surface or a standard paper print surface.

33. The composite wrap material of claim 28 wherein said paper material and/or said film is a metalized material.

34. The composite wrap material of claim 28 wherein said paper is printed before lamination so that the print shows through said film layer.

35. A ream wrap comprising;
a film layer, PLA layer and a paper layer having an additional layer of PLA coated on said paper.

36. The ream wrap of claim 35 wherein said inner layer of PLA bond to said outer film layer through, beat.

37. A high strength poly film ream wrapper comprising;
two sheets of PLA film laminated together with a layer of copolymer and/or terpolymer resins;
said copolymer and/or terpolymer resins comprising butene, bexene, and/or octene with ethylene in feed stocks.

38. A method for producing a high strength poly film ream wrapper comprising;
applying or extruding copolymer and/or terpolymer resins between two sheets of solid plastic PLA film; or
laminating two separate layers of solid plastic PLA film with a copolymer and/or terpolymer resin.

39. A high strength poly film ream wrap material comprising;
a first layer comprising a polypropylene, biaxially oriented polypropylene (BOPP), polyester or PLA solid film;
a second layer comprising a polypropylene, biaxially oriented polypropylene (BOPP), polyester, or PLA solid film;
a third layer comprising copolymer and/or terpolymer resins, alone, or blended with polyethylene or PLA;
said third layer interposed between said first layer and said second layer.

40. A method of making a high strength poly film ream wrapper comprising; applying a copolymer and/or terpolymer layer to either of solid plastic PLA film layers.
conveying said layers toward a pair of nip rollers;
directing said film layers to an adjacent, noncontact position with said copolymer and/or terpolymer resin layer on its respective oppositc sides prior to passing through the nip rollers;
passing said layers through said nip rollers;
forming said poly film ream wrapper.

41. An insulation facing material comprising;
a coextruded coated paper material comprising; a first layer of paper, a second layer of PLA resin material and a third outside sealant layer of low melt polymer resin, comprising, PLA;
wherein all three layers are integrally bonded together.

42. A process for making a composite material comprising:
providing a first sheet of cellulosic material and a second coextruded layer comprising two layers of PLA resin materials;
applying said coextrusion layers to a surface of said first sheet;
conveying said first sheet and second coextrusion layers into a laminating apparatus;
bonding said layers to form an integral composite material.
